# EUROPEAN PATENT APPLICATION

(11) **EP 4 746 425 A1**
(43) Date of publication of application: **20.05.2026**
(21) Application number: 24881090.5
(22) Date of filing: 08.07.2024
(51) Int. Cl.: H04N 21/4363

(54) **SCREEN MIRRORING METHOD, ELECTRONIC DEVICE, STORAGE MEDIUM, AND PROGRAM PRODUCT**

(30) Priority: 25.10.2023 CN 202311395705
(71) Applicant: Huawei Technologies Co., Ltd., Shenzhen, Guangdong 518129 (CN)
(72) Inventor: WANG, Lei, Shenzhen, Guangdong 518129 (CN); LI, Ziran, Shenzhen, Guangdong 518129 (CN)
(74) Representative: Thun, Clemens
(86) International application number: PCT/CN2024/104159
(87) International publication number: WO 2025/086716

(57) **Abstract**

Embodiments of this application provide a screen casting method, an electronic device, a storage medium, and a program product, and relate to the fields of video screen casting and whole-house intelligence technologies, which eliminate a need for dual-end devices of screen casting to be connected to a same local area network, thereby reducing a limitation on screen casting and making a use scenario of screen casting more flexible. The screen casting method includes: in response to an operation of initiating screen casting, initiating a Bluetooth low energy BLE advertising search; obtaining a first data packet and a second data packet from BLE Bluetooth advertising data, where the first data packet includes first verification information and encrypted information, and the second data packet includes second verification information and a key; decrypting the encrypted information by using the key; determining that the first data packet and the second data packet are associated screen casting information; displaying a screen casting device selection interface; in response to an operation of selecting a screen casting target device option, establishing a wireless connection to a screen casting target device; and initiating video screen casting to the screen casting target device via the wireless connection.

## Description

This application claims priority to Chinese Patent Application No. 202311395705.3, filed with the China National Intellectual Property Administration on October 25, 2023 and entitled "SCREEN CASTING METHOD, ELECTRONIC DEVICE, STORAGE MEDIUM, AND PROGRAM PRODUCT", which is incorporated herein by reference in its entirety.

### TECHNICAL FIELD

This application relates to the field of screen casting technologies, and specifically, to a screen casting method, an electronic device, a storage medium, and a program product.

### BACKGROUND

With increasing interactive functions between electronic devices, more users use a screen casting function. For example, when the user uses a video playback application on a mobile phone, the user may use a screen casting function of the video playback application to play a video on a television. Screen casting between the mobile phone and the television may be implemented according to a digital living network alliance (Digital Living Network Alliance, DLNA) protocol. During screen casting, a device needs to be first discovered according to a simple service discovery protocol (Simple Service Discovery Protocol, SSDP). This process requires that the two devices, namely, the mobile phone and the television, be connected to a same local area network. This imposes a limitation on the screen casting function, making it impossible to perform screen casting based on dual-end devices that are not connected to a same wireless fidelity (Wireless Fidelity, Wi-Fi) local area network.

### SUMMARY

In view of this, this application provides a screen casting method, an electronic device, a storage medium, and a program product, which eliminate a need for dual-end devices of screen casting to be connected to a same local area network, thereby reducing a limitation on screen casting and making a use scenario of screen casting more flexible.

According to a first aspect, an embodiment of this application provides a screen casting method, applied to a screen casting source device. The method includes: in response to an operation of initiating screen casting, initiating a Bluetooth low energy BLE advertising search; receiving found BLE Bluetooth advertising data, and obtaining a first data packet and a second data packet from the BLE Bluetooth advertising data, where the first data packet includes first verification information and encrypted information, and the second data packet includes second verification information and a key; decrypting the encrypted information by using the key, and obtaining device information and wireless connection information from the decrypted encrypted information; determining, based on the first verification information and the second verification information, that the first data packet and the second data packet are associated screen casting information; displaying a screen casting device selection interface, where an alternative device option that corresponds to one or more pieces of screen casting information determined in the BLE Bluetooth advertising data is displayed on the screen casting device selection interface, and the alternative device option includes the device information in the corresponding one or more pieces of screen casting information; in response to an operation of selecting a screen casting target device option of the at least one alternative device option, sending a wireless connection request to a screen casting target device based on the wireless connection information in the screen casting information that corresponds to the screen casting target device option, and establishing a wireless connection to the screen casting target device; and initiating video screen casting to the screen casting target device via the wireless connection.

Two associated data packets are added to BLE Bluetooth advertising data of the screen casting target device. In a screen casting process of the screen casting source device, the two associated data packets are determined through the BLE Bluetooth search and based on verification information. A key in one of the data packets is used to decrypt encrypted information in the other packet, to obtain the device information and the wireless connection information, and then discover the screen casting target device. Then, the wireless connection is established based on the wireless connection information to implement screen casting. Because a device is discovered in a BLE Bluetooth search manner, and dual ends do not need to be connected to a same local area network, restrictions on screen casting are small, and a use scenario is more flexible. In addition, compared with a manner of discovering a device by using an SSDP, when the manner of discovering a device through the BLE Bluetooth search is used, there is a lower probability that the device cannot be found. In addition, because a distance range of the BLE Bluetooth search is narrow, an irrelevant device is not easily found, the screen casting target device is more easily determined, and the screen casting confusion problem caused due to a large quantity of devices being found does not easily occur. Meanwhile, plaintext information in one of the data packets is used to decrypt encrypted information in the other packet, and verification is performed not only based on the plaintext information. This can improve security in the screen casting process, and prevents the data packet from being incorrectly identified by another device.

In a possible implementation, obtaining the device information and the wireless connection information from the decrypted encrypted information includes: obtaining the device information, the wireless connection information, and third verification information from the decrypted encrypted information; and a process of determining, based on the first verification information and the second verification information, that the first data packet and the second data packet are the associated screen casting information includes: determining, based on the first verification information, the second verification information, and the third verification information, that the first data packet and the second data packet are the associated screen casting information. In a process of determining the screen casting information from the BLE Bluetooth advertising data, in addition to verification performed based on the plaintext first verification information and the plaintext second verification information, verification may alternatively be performed based on the third verification information in the encrypted information. Only after the third verification information is decrypted by using the key in the second data packet, verification can be performed based on the third verification information in the first data packet. This can further improve security.

In a possible implementation, the first verification information includes a universally unique identifier UUID, the second verification information includes the UUID, a service identifier serviceID, and screen casting starting action information, the third verification information includes the serviceID, and the serviceID indicates a screen casting service. Verification performed based on the UUID and the serviceID can improve extensibility of the entire procedure. Based on different serviceID-based verification results, the data packet can be extended for use in other scenarios.

In a possible implementation, the method further includes: in response to the operation of initiating screen casting, sending a BLE Bluetooth advertisement including a third data packet, where the third data packet includes third verification information; obtaining a fourth data packet from the BLE Bluetooth advertising data, where the fourth data packet includes fourth verification information, the device information, and the wireless connection information; and determining, based on the fourth verification information, that the fourth data packet is the screen casting information. A procedure of determining the screen casting information based on the first data packet and the second data packet is to passively discover a device, and a procedure of determining the screen casting information based on the fourth data packet is to actively discover a device discovery process. The procedure of actively discovering a device and the procedure of passively discovering a device are synchronously performed, and therefore a probability and a speed of device discovery can be improved.

In a possible implementation, after the process of determining, based on the first verification information and the second verification information, that the first data packet and the second data packet are the associated screen casting information, sending the third data packet is stopped. That is, if the device has been discovered in the procedure of passively discovering a device, the third data packet used to actively discover a device is no longer sent, to implement a logical closed-loop of the entire procedure and improve security.

In a possible implementation, the screen casting source device is a file sharing source device, the operation of initiating screen casting is an operation of initiating file sharing, the serviceID indicates a file sharing service, the screen casting information is file sharing information, the screen casting device selection interface is a sharing device selection interface, the screen casting target device option is a file sharing target device option, the screen casting target device is a file sharing target device, initiating video screen casting is initiating file sharing, and the screen casting starting action information is file sharing starting action information. In the file sharing scenario, dual-end devices may implement device discovery through BLE Bluetooth advertising, that is, determine file sharing information through BLE Bluetooth advertising, and then establish a wireless connection based on device information and wireless connection information in the file sharing information and implement file sharing via the wireless connection. That is, application scenarios of the interaction procedure are extended.

In a possible implementation, either the first data packet or the second data packet is a same advertising structure of a protocol data unit in the Bluetooth advertising data. In this manner, an existing Bluetooth protocol does not need to be greatly changed, and a device having a screen casting capability can be discovered only by adding screen casting capability information to a reserved field in the protocol.

In a possible implementation, the wireless connection is a Bluetooth low energy BLE connection or a wireless fidelity Wi-Fi point-to-point P2P connection. Device discovery can be implemented in the Bluetooth search manner. Wireless screen casting can be implemented in more than one connection mode. The BLE Bluetooth connection can be directly implemented based on the discovered device, and video screen casting can be initiated via the BLE Bluetooth connection. Alternatively, the Wi-Fi P2P connection can be implemented based on the discovered device, and video screen casting can be initiated via the Wi-Fi P2P connection.

In a possible implementation, the wireless connection is the BLE Bluetooth connection. Initiating video screen casting to the screen casting target device via the wireless connection includes: sending an online video address to the screen casting target device via the BLE Bluetooth connection, to implement online video screen casting. In other words, both device discovery and the established wireless connection are implemented via Bluetooth. Therefore, there are small limitations on devices at dual ends of screen casting, and power consumption of the BLE Bluetooth implementation is low.

In a possible implementation, the wireless connection is the Wi-Fi P2P connection. Initiating video screen casting to the screen casting target device via the wireless connection includes: sending an online video address or a local video to the screen casting target device via the Wi-Fi P2P connection. Due to large bandwidth of the Wi-Fi P2P connection, local video screen casting may be implemented. Therefore, the Wi-Fi P2P connection may be implemented based on a device discovered via Bluetooth, and local video screen casting may be implemented via the Wi-Fi P2P connection.

According to a second aspect, an embodiment of this application provides a screen casting method, applied to a screen casting target device. The method includes: in response to an operation of initiating Bluetooth advertising, initiating Bluetooth low energy BLE advertising, where the BLE Bluetooth advertising data includes a first data packet and a second data packet, the first data packet includes first verification information and encrypted information, the second data packet includes second verification information and a key, the key is used to decrypt the encrypted information, and the encrypted information includes device information and wireless connection information; receiving a wireless connection request sent by a screen casting source device, and establishing a wireless connection to the screen casting source device based on the wireless connection request; and performing video screen casting via the wireless connection.

In a possible implementation, the encrypted information further includes third verification information. In a process of determining the screen casting information from the BLE Bluetooth advertising data, in addition to verification performed based on the plaintext first verification information and the plaintext second verification information, verification may alternatively be performed based on the third verification information in the encrypted information. Only after the third verification information is decrypted by using the key in the second data packet, verification can be performed based on the third verification information in the first data packet. This can further improve security.

In a possible implementation, the first verification information includes a universally unique identifier UUID, the second verification information includes the UUID, a service identifier serviceID, and screen casting starting action information, and the third verification information includes the serviceID. Verification performed based on the UUID and the serviceID can improve extensibility of the entire procedure. Based on different serviceID-based verification results, the data packet can be extended for use in other scenarios.

In a possible implementation, the method further includes: receiving, through BLE Bluetooth advertising, a third data packet sent by the screen casting source device; obtaining third verification information from the third data packet; and in response to that the third verification information is obtained, sending a fourth data packet through BLE Bluetooth advertising, where the fourth data packet includes fourth verification information, the device information, and the wireless connection information. A procedure of determining the screen casting information based on the first data packet and the second data packet is to passively discover a device, and a procedure of determining the screen casting information based on the fourth data packet is to actively discover a device discovery process. The procedure of actively discovering a device and the procedure of passively discovering a device are synchronously performed, and therefore a probability and a speed of device discovery can be improved.

In a possible implementation, in response to that the third verification information is obtained, sending the first data packet and the second data packet is stopped. That is, if the device has been discovered in the procedure of actively discovering a device, the first data packet and the second data packet used to passively discover a device are no longer sent, to implement a logical closed-loop of the entire procedure and improve security.

In a possible implementation, the screen casting target device is a file sharing target device, the serviceID indicates a file sharing service, the screen casting source device is a file sharing source device, performing video screen casting is performing file sharing, and the screen casting starting action information is file sharing starting action information. This extends an application scenario of the interaction procedure.

In a possible implementation, either the first data packet or the second data packet is a same advertising structure of a protocol data unit in the Bluetooth advertising data. In this manner, an existing Bluetooth protocol does not need to be greatly changed, and a device having a screen casting capability can be discovered only by adding screen casting capability information to a reserved field in the protocol.

In a possible implementation, the wireless connection is a Bluetooth low energy BLE connection or a wireless fidelity Wi-Fi point-to-point P2P connection.

In a possible implementation, the wireless connection is the BLE Bluetooth connection. Initiating video screen casting to the screen casting target device via the wireless connection includes: sending an online video address to the screen casting target device via the BLE Bluetooth connection. In other words, both device discovery and the established wireless connection are implemented via Bluetooth. Therefore, there are small limitations on devices at dual ends of screen casting, and power consumption of the BLE Bluetooth implementation is low.

In a possible implementation, the wireless connection is the Wi-Fi P2P connection. Initiating video screen casting to the screen casting target device via the wireless connection includes: sending an online video address or a local video to the screen casting target device via the Wi-Fi P2P connection. Due to large bandwidth of the Wi-Fi P2P connection, local video screen casting may be implemented. Therefore, the Wi-Fi P2P connection may be implemented based on a device discovered via Bluetooth, and screen casting of the local video may be implemented via the Wi-Fi P2P connection.

According to a third aspect, a screen casting method is provided, applied to a screen casting source device. The method includes: in response to an operation of initiating screen casting, initiating Bluetooth low energy BLE advertising, where the Bluetooth low energy BLE advertising data includes a first data packet and a second data packet, the first data packet includes first verification information and encrypted information, the second data packet includes second verification information and a key, the key is used to decrypt the encrypted information, and the encrypted information includes device information and wireless connection information; receiving a wireless connection request sent by a screen casting target device, and establishing a wireless connection to the screen casting source device based on the wireless connection request; and initiating video screen casting to the screen casting target device via the wireless connection.

In a possible implementation, the encrypted information further includes third verification information.

In a possible implementation, the first verification information includes a universally unique identifier UUID, the second verification information includes the UUID, a service identifier serviceID, and screen casting starting action information, and the third verification information includes the serviceID.

In a possible implementation, the method further includes: receiving, through BLE Bluetooth advertising, a third data packet sent by the screen casting target device; obtaining third verification information from the third data packet; and in response to that the third verification information is obtained, sending a fourth data packet through BLE Bluetooth advertising, where the fourth data packet includes fourth verification information, the device information, and the wireless connection information.

In a possible implementation, in response to that the third verification information is obtained, sending the first data packet and the second data packet is stopped.

In a possible implementation, the screen casting target device is a file sharing target device, the serviceID indicates a file sharing service, the screen casting source device is a file sharing source device, initiating video screen casting is initiating file sharing, and the screen casting starting action information is file sharing starting action information.

In a possible implementation, either the first data packet or the second data packet is a same advertising structure of a protocol data unit in the Bluetooth advertising data. In this manner, an existing Bluetooth protocol does not need to be greatly changed, and a device having a screen casting capability can be discovered only by adding screen casting capability information to a reserved field in the protocol.

In a possible implementation, the wireless connection is a Bluetooth low energy BLE connection or a wireless fidelity Wi-Fi point-to-point P2P connection. Device discovery can be implemented in the Bluetooth search manner. Wireless screen casting can be implemented in more than one connection mode. The BLE Bluetooth connection can be directly implemented based on the discovered device, and video screen casting can be initiated via the BLE Bluetooth connection. Alternatively, the Wi-Fi P2P connection can be implemented based on the discovered device, and video screen casting can be initiated via the Wi-Fi P2P connection.

In a possible implementation, the wireless connection is the BLE Bluetooth connection. Initiating video screen casting to the screen casting target device via the wireless connection includes: sending an online video address to the screen casting target device via the BLE Bluetooth connection, to implement online video screen casting. In other words, both device discovery and the established wireless connection are implemented via Bluetooth. Therefore, there are small limitations on devices at dual ends of screen casting, and power consumption of the BLE Bluetooth implementation is low.

In a possible implementation, the wireless connection is the Wi-Fi P2P connection. Initiating video screen casting to the screen casting target device via the wireless connection includes: sending an online video address or a local video to the screen casting target device via the Wi-Fi P2P connection. Due to large bandwidth of the Wi-Fi P2P connection, local video screen casting may be implemented. Therefore, the Wi-Fi P2P connection may be implemented based on a device discovered via Bluetooth, and local video screen casting may be implemented via the Wi-Fi P2P connection.

According to a fourth aspect, a screen casting method is provided, applied to a screen casting target device. The method includes: in response to an operation of initiating a Bluetooth search, initiating a Bluetooth low energy BLE advertising search; receiving found BLE Bluetooth advertising data, and obtaining a first data packet and a second data packet from the BLE Bluetooth advertising data, where the first data packet includes first verification information and encrypted information, and the second data packet includes second verification information and a key; decrypting the encrypted information by using the key, and obtaining device information and wireless connection information from the decrypted encrypted information; determining, based on the first verification information and the second verification information, that the first data packet and the second data packet are associated screen casting information; displaying a screen casting device selection interface, where an alternative device option that corresponds to one or more pieces of screen casting information determined in the BLE Bluetooth advertising data is displayed on the screen casting device selection interface, and the alternative device option includes the device information in the corresponding one or more pieces of screen casting information; in response to an operation of selecting a screen casting source device option of the at least one alternative device option, sending a wireless connection request to a screen casting source device based on the wireless connection information in the screen casting information that corresponds to the screen casting source device option, and establishing a wireless connection to the screen casting source device; and performing video screen casting via the wireless connection.

In a possible implementation, obtaining the device information and the wireless connection information from the decrypted encrypted information includes: obtaining the device information, the wireless connection information, and third verification information from the decrypted encrypted information; and a process of determining, based on the first verification information and the second verification information, that the first data packet and the second data packet are the associated screen casting information includes: determining, based on the first verification information, the second verification information, and the third verification information, that the first data packet and the second data packet are the associated screen casting information.

In a possible implementation, the first verification information includes a universally unique identifier UUID, the second verification information includes the UUID, a service identifier serviceID, and screen casting starting action information, the third verification information includes the serviceID, and the serviceID indicates a screen casting service.

In a possible implementation, the method further includes: in response to the operation of initiating a Bluetooth search, sending a BLE Bluetooth advertisement including a third data packet, where the third data packet includes third verification information; obtaining a fourth data packet from the BLE Bluetooth advertising data, where the fourth data packet includes fourth verification information, the device information, and the wireless connection information; and determining, based on the fourth verification information, that the fourth data packet is the screen casting information.

In a possible implementation, after the process of determining, based on the first verification information and the second verification information, that the first data packet and the second data packet are the associated screen casting information, sending the third data packet is stopped.

In a possible implementation, the screen casting source device is a file sharing source device, the serviceID indicates a file sharing service, the screen casting information is file sharing information, the screen casting device selection interface is a sharing device selection interface, the screen casting target device option is a file sharing target device option, the screen casting target device is a file sharing target device, performing video screen casting is performing file sharing, and the screen casting starting action information is file sharing starting action information.

In a possible implementation, either the first data packet or the second data packet is a same advertising structure of a protocol data unit in the Bluetooth advertising data. In this manner, an existing Bluetooth protocol does not need to be greatly changed, and a device having a screen casting capability can be discovered only by adding screen casting capability information to a reserved field in the protocol.

In a possible implementation, the wireless connection is a Bluetooth low energy BLE connection or a wireless fidelity Wi-Fi point-to-point P2P connection.

In a possible implementation, the wireless connection is the BLE Bluetooth connection. Initiating video screen casting to the screen casting target device via the wireless connection includes: sending an online video address to the screen casting target device via the BLE Bluetooth connection. In other words, both device discovery and the established wireless connection are implemented via Bluetooth. Therefore, there are small limitations on devices at dual ends of screen casting, and power consumption of the BLE Bluetooth implementation is low.

In a possible implementation, the wireless connection is the Wi-Fi P2P connection. Initiating video screen casting to the screen casting target device via the wireless connection includes: sending an online video address or a local video to the screen casting target device via the Wi-Fi P2P connection. Due to large bandwidth of the Wi-Fi P2P connection, local video screen casting may be implemented. Therefore, the Wi-Fi P2P connection may be implemented based on a device discovered via Bluetooth, and local video screen casting may be implemented via the Wi-Fi P2P connection.

According to a fifth aspect, an electronic device is provided, including a memory configured to store computer program instructions and a processor configured to execute the program instructions. When the computer program instructions are executed by the processor, the electronic device is enabled to perform the foregoing screen casting method.

According to a sixth aspect, a computer-readable storage medium is provided. The computer-readable storage medium includes a stored program. When the program is run, a device in which the computer-readable storage medium is located is controlled to perform the foregoing screen casting method.

According to a seventh aspect, a computer program product is provided. The computer program product includes executable instructions. When the executable instructions are executed on a computer, the computer is enabled to perform the foregoing screen casting method.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a diagram of an architecture related to multicast in a related technology;
FIG. 2 is a schematic flowchart of discovering a device in a related technology;
FIG. 3 is a block diagram of a structure of an electronic device according to an embodiment of this application;
FIG. 4 is a diagram of a software architecture of an electronic device according to an embodiment of this application;
FIG. 5 is a diagram of screen casting between a screen casting source device and a screen casting target device according to an embodiment of this application;
FIG. 6 is a diagram of an interaction procedure between a screen casting source device and a screen casting target device according to an embodiment of this application;
FIG. 7 is a schematic flowchart of discovering a device between a screen casting source device and a screen casting target device according to an embodiment of this application;
FIG. 8 is a diagram of a structure of Bluetooth advertising data according to an embodiment of this application;
FIG. 9 is a diagram of another interaction procedure between a screen casting source device and a screen casting target device according to an embodiment of this application;
FIG. 10 is a diagram of a system related to online video screen casting according to an embodiment of this application;
FIG. 11 is a diagram of still another interaction procedure between a screen casting source device and a screen casting target device according to an embodiment of this application; and
FIG. 12 is a diagram of yet another interaction procedure between a screen casting source device and a screen casting target device according to an embodiment of this application.

### DESCRIPTION OF EMBODIMENTS

To better understand technical solutions of this application, the following describes embodiments of this application in detail with reference to the accompanying drawings.

It should be clear that the described embodiments are merely some but not all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may indicate the following three cases: Only A exists, both A and B exist, and only B exists. In addition, the character "/" in this specification usually indicates an "or" relationship between the associated objects.

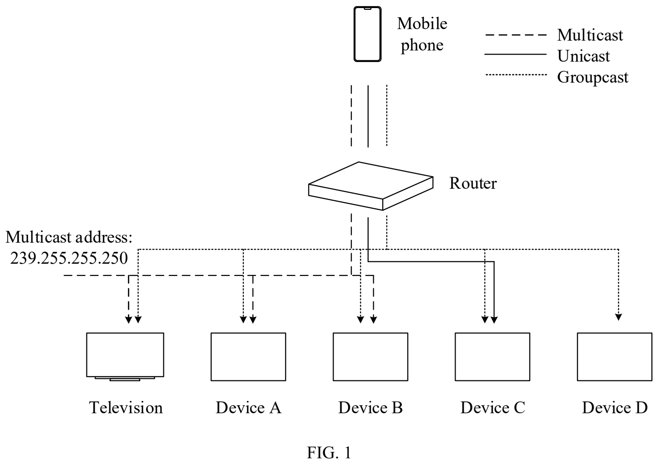

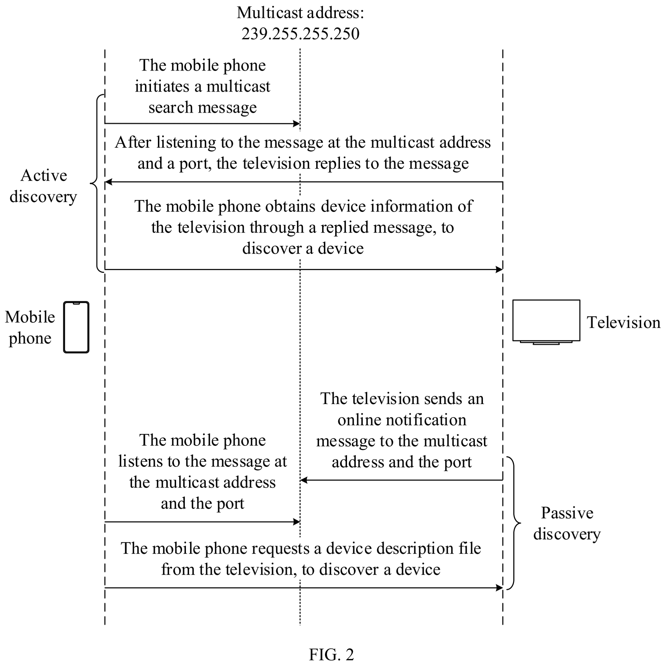

Before the technical solutions in embodiments of this application are described, related technologies and technical problems thereof are first described. In the related technologies, a Digital Living Network Alliance (Digital Living Network Alliance, DLNA) protocol is used for screen casting. For screen casting, an SSDP needs to be used to discover a device, and then, a video playback link, that is, a unified resource locator (Uniform Resource Locator, URL), is transferred to a large screen in a remote invocation manner using a simple object access protocol (Simple Object Access Protocol, SOAP). After the URL is received, a local player is started on the large screen to play a video based on the URL. The SSDP provides a mechanism for discovering a device in a local area network. A control point may query, by using the SSDP based on its own requirement, a device that provides a specific service in a local area network in which the control point is located. A device may alternatively announce, by using the SSDP, its existence to a control point in a local area network in which the device is located. Discovery between a mobile phone and a television is used as an example. As shown in FIG. 1, the mobile phone may use a multicast address 239.255.255.250 and a port 1900 to implement device discovery. There are two device discovery manners: active discovery and passive discovery manners. As shown in FIG. 2, in an active discovery process, the mobile phone initiates a multicast search (Multicast Search, M-Search) message. After listening to the M-Search message from the mobile phone at the multicast address and the port, the television replies to the message. The mobile phone reads device information of the television through a replied message, to discover a device. In a passive discovery process, the television sends an online notification message to the multicast address and the port, which is a message notifying the mobile phone in the network that the television goes online. The mobile phone listens to the message at the multicast address and the port, and after listening to the message that the television goes online, the mobile phone requests a device description problem from the television, to discover a device. However, the device discovery manners require devices to be connected to a same local area network. If the devices are not connected to the same local area network, screen casting cannot be performed in the manners, which limits screen casting scenarios. In addition, in the manners, due to reasons such as a router, a network packet loss, a virtual private network (Virtual Private Network, VPN), and port occupation, a case in which a device cannot be found easily occurs. In some scenarios, for example, in a hotel, many users are connected to a same local area network. When the user performs screen casting to a television in a room of the user, many devices are found, and the user cannot distinguish between rooms and corresponding device names, which leads to a screen casting confusion problem.

For the problem, technical solutions in embodiments of this application are provided. The following describes the technical solutions in embodiments of this application.

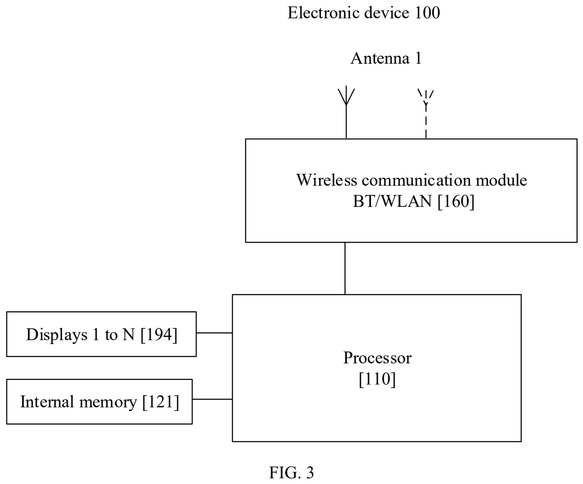

An electronic device in embodiments of this application is first described. FIG. 3 is a diagram of a structure an electronic device 100.

The electronic device 100 may include a processor 110, an interface 120 for external memory, an internal memory 121, a wireless communication module 160, a display 194, an antenna 1, and the like.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The processor 110 may be configured to perform functions such as encoding and decoding of an audio/video stream.

The controller may generate an operation control signal based on an instruction operation code and a timing signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

A wireless communication function of the electronic device 100 may be implemented through the antenna 1, the wireless communication module 160, the modem processor, the baseband processor, and the like.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), and the like and that is applied to the electronic device 100. The wireless communication module 160 may be one or more components integrating at least one communication processing module. The wireless communication module 160 receives an electromagnetic wave through the antenna 1, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 1. The wireless communication module 160 includes, for example, a Bluetooth chip.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

In some embodiments, for the electronic device 100, the touch sensor may be disposed on the display 194, so that the touch sensor and the display 194 constitute a touchscreen, also referred to as a "touch control screen". The touch sensor is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor may alternatively be disposed on a surface of the electronic device 100, and is at a position different from that of the display 194.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and an address book) and the like that are created during use of the electronic device 100. In addition, the internal memory 121 may include a high-speed random access memory, or may include a non-volatile memory, for example, at least one magnetic disk storage device, a flash storage device, or a universal flash storage (universal flash storage, UFS). The processor 110 runs instructions stored in the internal memory 121 and/or instructions stored in the memory disposed in the processor, to perform various function applications and data processing of the electronic device 100.

A software system of the electronic device 100 may use a layered architecture, an event-driven architecture, a microkernel architecture, a microservice architecture, or a cloud architecture. In this embodiment of the present invention, an Android system of a layered architecture is used as an example to illustrate a software structure of the electronic device 100.

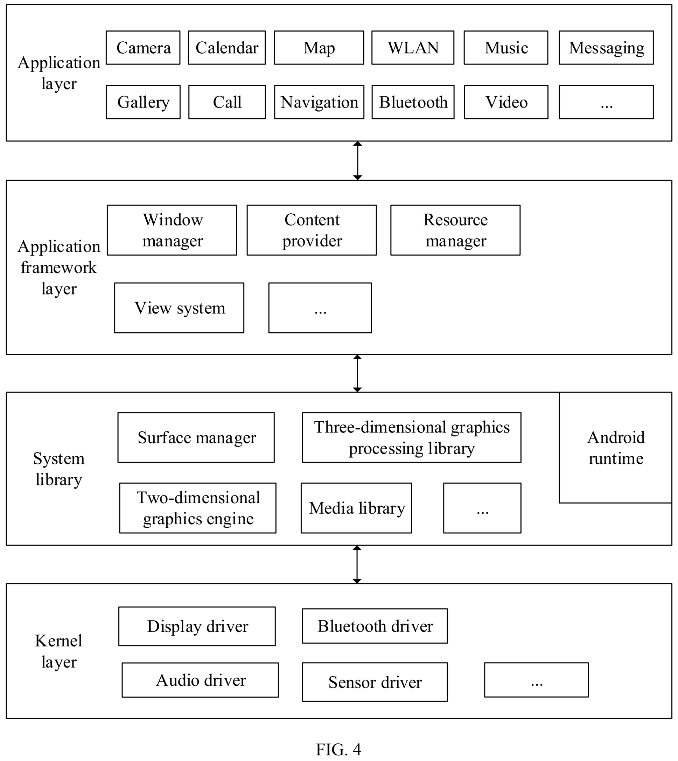

FIG. 4 is a block diagram of the software structure of the electronic device 100 according to an embodiment of the present invention.

In the layered architecture, software is divided into several layers, and each layer has a clear role and task. The layers communicate with each other through a software interface. In some embodiments, the Android system is divided into four layers from top to bottom: an application layer, an application framework layer, an Android runtime (Android runtime) and system library, and a kernel layer.

The application layer may include a series of application packages.

As shown in FIG. 4, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a resource manager, and the like.

The window manager is configured to manage a window program. The content provider is configured to: store and obtain data, and make the data be accessible by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views.

The resource manager provides various resources such as a localized character string, an icon, an image, a layout file, and a video file for an application.

The Android runtime includes a core library and a virtual machine. The Android runtime is responsible for scheduling and management of the Android system.

The core library includes two parts: One part is a function that needs to be invoked in a Java language, and the other part is a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a Bluetooth driver, an audio driver, and a sensor driver.

The electronic device in embodiments of this application may be any product such as a smart television, a mobile phone, a tablet computer, a personal computer (personal computer, PC), a personal digital assistant (personal digital assistant, PDA), a smartwatch, a wearable electronic device, an augmented reality (augmented reality, AR) device, a virtual reality (virtual reality, VR) device, a vehicle-mounted device, an uncrewed aerial machine device, an intelligent vehicle, a smart speaker, a robot, or smart glasses.

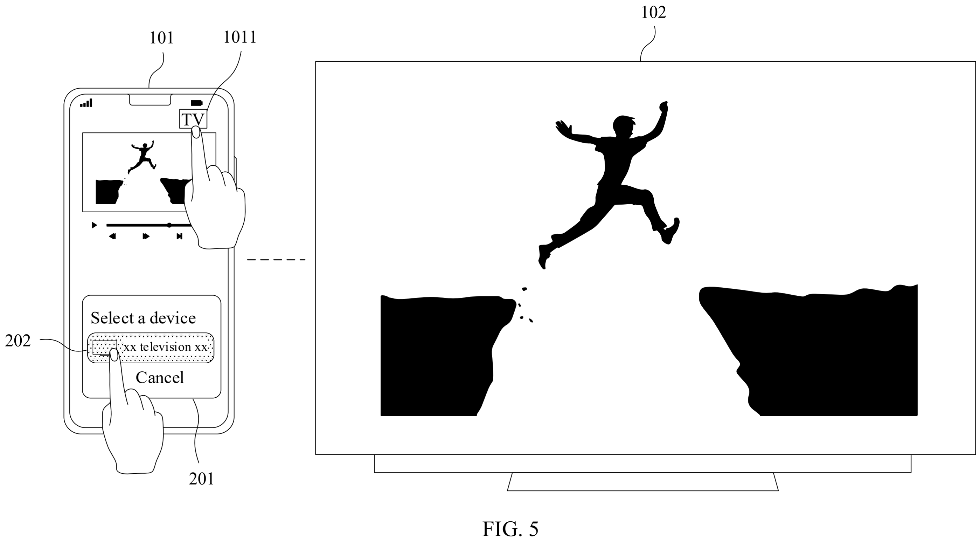

As shown in FIG. 5, a system in embodiments of this application includes two electronic devices: a screen casting source device 101 and a screen casting target device 102. Both of the two electronic devices may be the electronic device 100 shown in FIG. 3, and use the software architecture shown in FIG. 4. A difference lies in that the screen casting target device 102 is usually a device with a larger-sized screen relative to the screen casting source device 101. This helps cast a video to an electronic device with a large-sized screen for watching when a user uses an electronic device with a small-sized screen. For example, the screen casting source device 101 is a mobile phone, and the screen casting target device 102 is a television. The screen casting source device 101 is an electronic device that initiates screen casting, and the screen casting target device 102 is an electronic device that receives screen casting. A specific scenario is used as an example for description. The user watches a video by using a video application on the screen casting source device 101. In this case, the user wants to cast the video to the television, that is, the screen casting target device 102, for watching. A TV button 1011 may be tapped in the video application, and the screen casting source device 101 initiates a Bluetooth advertising search, in other words, performs a Bluetooth device scan. After the screen casting target device is found, a screen casting device selection interface 201 is displayed on an interface of the screen casting source device 101. An alternative device option 202 corresponding to the screen casting target device 102 is displayed on the screen casting device selection interface. The alternative device option 202 includes a name of the screen casting target device 102, for example, "xx television xx". After the user taps the alternative device option 202, video screen casting is performed between the screen casting source device 101 and the screen casting target device 102. That is, a video currently played by the screen casting source device 101 may be cast to the screen casting target device 102 for playing.

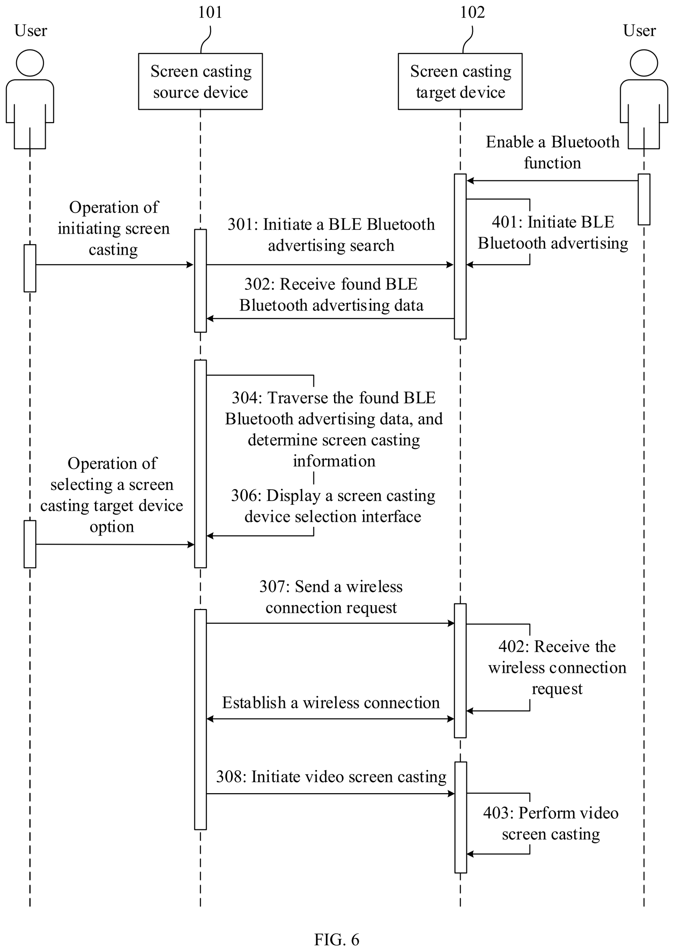

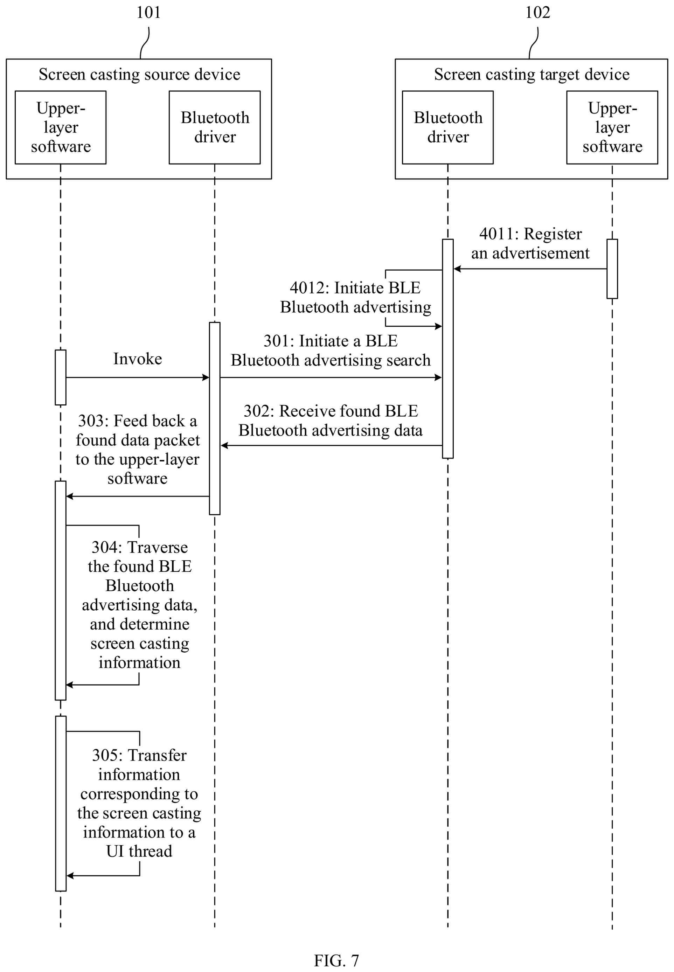

The following describes this embodiment of this application based on an interaction procedure between the screen casting source device 101 and the screen casting target device 102. As shown in FIG. 6 and FIG. 7, an embodiment of this application provides a screen casting interaction method, including a screen casting method applied to the screen casting source device 101 and a screen casting method applied to the screen casting target device 102. The screen casting method applied to the screen casting source device 101 includes steps 301 to 308, and the screen casting method applied to the screen casting target device 102 includes steps 401 to 403. The following uses an example in which the screen casting source device 101 is a mobile phone, and the screen casting target device 102 is a television for description.

The interaction procedure includes the following steps.

The user performs, on the screen casting target device 102, an operation of initiating Bluetooth low energy BLE advertising, for example, enabling a Bluetooth function on a settings interface of the screen casting target device 102, so that the screen casting target device 102 is in a Bluetooth discoverable state. It should be noted that the operation of initiating BLE Bluetooth advertising may be implemented in different manners, for example, may alternatively be implemented by using a button on the remote control. This is not limited in embodiments of this application, and is merely described herein as an example.

When detecting the operation of initiating BLE Bluetooth advertising performed by the user on the screen casting target device 102, in response to the operation of initiating BLE Bluetooth advertising, the screen casting target device 102 performs step 401 of initiating BLE Bluetooth advertising.

Step 401 specifically includes the following steps.

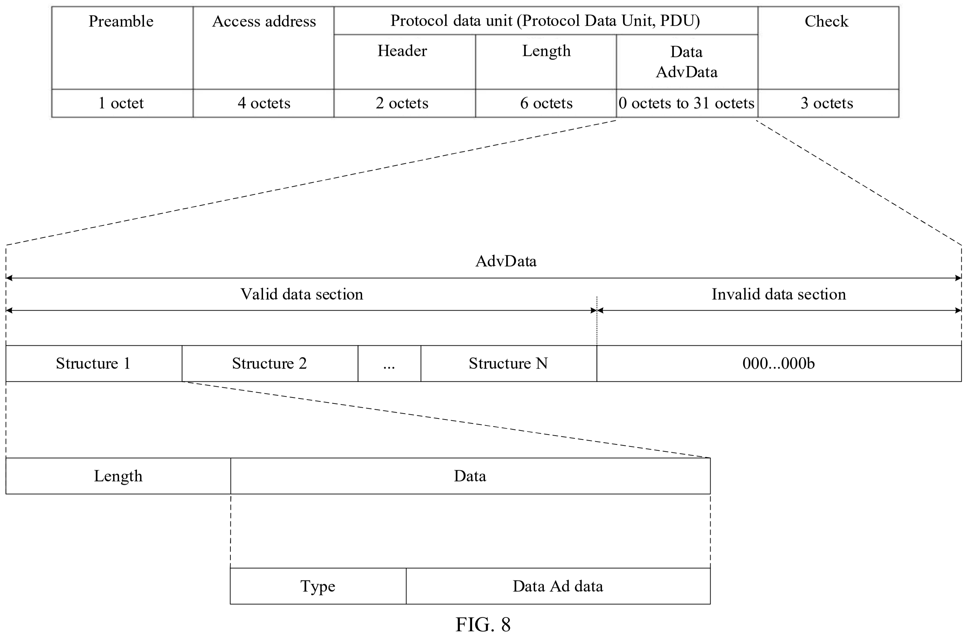

Upper-layer software of the screen casting target device 102 performs step 4011 of registering an advertisement. Content of the registered advertisement includes a first data packet and a second data packet. The first data packet includes first verification information and encrypted information, and the second data packet includes second verification information and a key. The key is used to decrypt the encrypted information, and the encrypted information includes device information and wireless connection information. In this embodiment of this application, the first data packet and the second data packet are added to a reserved field of a universal Bluetooth protocol of the screen casting target device 102, and are used to identify a corresponding device and establish a connection in the interaction procedure. The first data packet and the second data packet may respectively be two data packets in a packet structure. For example, the Bluetooth advertising data is a BLE advertising packet, and a structure of the BLE advertising packet is shown in FIG. 8, where octet represents eight bits, and a PDU of the BLE advertising packet includes a plurality of structures AD structures. In this embodiment of this application, a structure in the PDU may be used as a data packet. The first verification information and the second verification information may include a universally unique identifier (Universally Unique Identifier, UUID), and the UUID is, for example, "BLECast". The device information is, for example, a device name "xx television xx", which helps the user select the screen casting target device based on the device name. The wireless connection information includes, for example, a media access control address (Media Access Control Address, MAC address) "86:xx:xx:xx:17:DB" and Bluetooth BrMAC "74:xx:xx:xx:32:40". In addition, the encrypted information may further include a service name and a callback function. The callback function may help the screen casting source device invoke the callback function to perform some steps in the interaction procedure. The second verification information may further include screen casting starting action information, for example, "startCast", which indicates a screen casting starting action. For example, the key is "2", indicating that an encryption type solveType is 2. The encrypted information may be decrypted by using the key. The structure of the advertising packet in FIG. 8 is merely an example. This is not limited in embodiments of this application.

A Bluetooth driver of the screen casting target device 102 performs step 4012 of initiating BLE Bluetooth advertising. BLE Bluetooth advertising data includes the first data packet and the second data packet. The first data packet and the second data packet may be adjacent data packets in the advertising packet, and the first data packet and the second data packet may be alternately sent.

The user performs, on the screen casting source device 101, an operation of initiating screen casting. For example, as shown in FIG. 5, the screen casting source device 101 runs a video application, the user taps the "TV" button 1011 in an upper right corner of a video playback interface of the screen casting source device 101, and tapping the button 1011 is performing the operation of initiating screen casting. It should be noted that the operation of initiating screen casting may be implemented in different manners, for example, may alternatively be triggered and implemented by using a gesture operation. This is not limited in embodiments of this application, and only an example is provided herein for description.

When detecting the operation of initiating screen casting by the user on the screen casting source device 101, upper-layer software of the screen casting source device 101 invokes a Bluetooth driver, so that in response to the operation of initiating screen casting, the Bluetooth driver of the screen casting source device 101 performs step 301 of initiating a BLE Bluetooth advertising search. The BLE Bluetooth advertising search may also be referred to as a Bluetooth scan. For example, after the user taps the "TV" button 1011, the video application on the screen casting source device 101 invokes the Bluetooth driver, and initiates the BLE Bluetooth advertising search via a Bluetooth chip.

The Bluetooth driver of the screen casting source device 101 performs step 302 of receiving found BLE Bluetooth advertising data. The BLE Bluetooth advertising data includes a plurality of data packets.

The Bluetooth driver of the screen casting source device 101 may perform, by using the callback function, step 303 of feeding back all found BLE Bluetooth advertising data, that is, the found at least one data packet, to the upper-layer software, that is, the video application.

The upper-layer software of the screen casting source device 101 performs step 304 of traversing all the found BLE Bluetooth advertising data, and obtains the first data packet and the second data packet from the found BLE Bluetooth advertising data. The first verification information in the first data packet and the second verification information in the second data packet are plaintext. The two data packets may be determined as associated information through verification performed based on the two pieces of verification information. The encrypted information in the first data packet may be decrypted by using the key in the second data packet, and the device information and the wireless connection information are obtained from the decrypted encrypted information. The encrypted information may further have a callback function. The first data packet and the second data packet are determined to be associated screen casting information based on the first verification information and the second verification information. After the screen casting information is determined, a subsequent screen casting procedure is performed. That is, if the device information and the wireless connection information are obtained from the first data packet through decryption by using the key in the second data packet, and verification based on the first verification information and the second verification information succeeds, subsequent step 305 is performed.

The upper-layer software of the screen casting source device 101 performs step 305 of transferring the device information and the wireless connection information in the screen casting information to a user interface (User Interface, UI) thread.

The UI thread of the screen casting source device 101 performs step 306 of displaying the screen casting device selection interface 201. The alternative device option 202 that corresponds to one or more pieces of screen casting information determined in the BLE Bluetooth advertising data is displayed on the screen casting device selection interface 201, and the alternative device option 202 includes the device information in the corresponding one or more pieces of screen casting information. For example, in this embodiment, only screen casting information corresponding to the screen casting target device 102 is found, and therefore, only the alternative device option 202 including a device name "xx television xx" is displayed.

When tapping the alternative device option 202 on the screen casting source device 101, the user performs an operation of selecting a screen casting target device option of the at least one alternative device option 202. The alternative device option 202 tapped by the user is the screen casting target device option selected by the user. When detecting that the user performs, on the screen casting source device 101, the operation of selecting the screen casting target device option of the at least one alternative device option 202, the screen casting source device 101 performs, based on the wireless connection information in the screen casting information that corresponds to the screen casting target device option, step 307 of sending a wireless connection request to the screen casting target device 102, and establishing a wireless connection to the screen casting target device.

The screen casting target device 102 performs step 402 of receiving the wireless connection request sent by the screen casting source device 101, and establishes the wireless connection to the screen casting source device based on the wireless connection request.

The screen casting source device 101 performs step 308 of initiating video screen casting to the screen casting target device 102 via the wireless connection.

The screen casting target device 102 performs step 403 of performing video screen casting via the wireless connection.

According to the screen casting method in this embodiment of this application, two associated data packets are added to BLE Bluetooth advertising data of the screen casting target device. In a screen casting process of the screen casting source device, the two associated data packets are determined through the BLE Bluetooth search and based on verification information. A key in one of the data packets is used to decrypt encrypted information in the other packet, to obtain the device information and the wireless connection information, and then discover the screen casting target device. Then, the wireless connection is established based on the wireless connection information to implement screen casting. Because a device is discovered in a BLE Bluetooth search manner, and dual ends do not need to be connected to a same local area network, restrictions on screen casting are small, and a use scenario is more flexible. In addition, compared with a manner of discovering a device by using an SSDP, when the manner of discovering a device through the BLE Bluetooth search is used, there is a lower probability that the device cannot be found. In addition, because a distance range of the BLE Bluetooth search is narrow, an irrelevant device is not easily found, the screen casting target device is more easily determined, and the screen casting confusion problem caused due to a large quantity of devices being found does not easily occur. Meanwhile, plaintext information in one of the data packets is used to decrypt encrypted information in the other packet, and verification is performed not only based on the plaintext information. This can improve security in the screen casting process, and prevents the data packet from being incorrectly identified by another device.

In some embodiments, the encrypted information further includes third verification information. Obtaining the device information and the wireless connection information from the decrypted encrypted information includes: obtaining the device information, the wireless connection information, and the third verification information from the decrypted encrypted information; and a process of determining, based on the first verification information and the second verification information, that the first data packet and the second data packet are the associated screen casting information includes: determining, based on the first verification information, the second verification information, and the third verification information, that the first data packet and the second data packet are the associated screen casting information. In other words, in a process of determining the screen casting information from the BLE Bluetooth advertising data, in addition to verification performed based on the plaintext first verification information and the plaintext second verification information, verification may alternatively be performed based on the third verification information in the encrypted information. Only after the third verification information is decrypted by using the key in the second data packet, verification can be performed based on the third verification information in the first data packet. This can further improve security.

In some embodiments, the first verification information includes a universally unique identifier UUID, the second verification information includes the UUID, a service identifier serviceID, and screen casting starting action information, and the third verification information includes the serviceID. The UUID may indicate a BLE Bluetooth discovery device service, and the serviceID indicates a screen casting service. For example, the first verification information includes a UUID "BLECAST", the second verification information includes the UUID "BLECAST", a serviceID "HwBLeCast", and screen casting starting action information "startCast", and the third verification information includes the serviceID "HwBLeCast". The screen casting source device determines that services corresponding to the two data packets are the BLE Bluetooth discovery device service if determining that the UUID in the first verification information and that in the second verification information are the same and are both "BLECAST"; determines that the services corresponding to the two data packets are the screen casting service if determining that the serviceID in the second verification information and that in the third verification information are the same and are both "HwBLeCast"; determines, based on the screen casting starting action information "startCast" in the second data packet, to start a screen casting procedure; and determines that the first data packet and the second data packet are the associated screen casting information. Verification performed based on the UUID and the serviceID can improve extensibility of the entire procedure. Based on different serviceID-based verification results, the data packet can be extended for use in other scenarios. For example, in another possible implementation, if the UUIDs in the two data packets are determined to be fields corresponding to the BLE Bluetooth discovery service, and the serviceIDs in the two packets are determined to be fields corresponding to a file sharing service, it is determined that the two data packets are not mutually associated screen casting information, but are mutually associated file sharing information, and are used to implement the file sharing service.

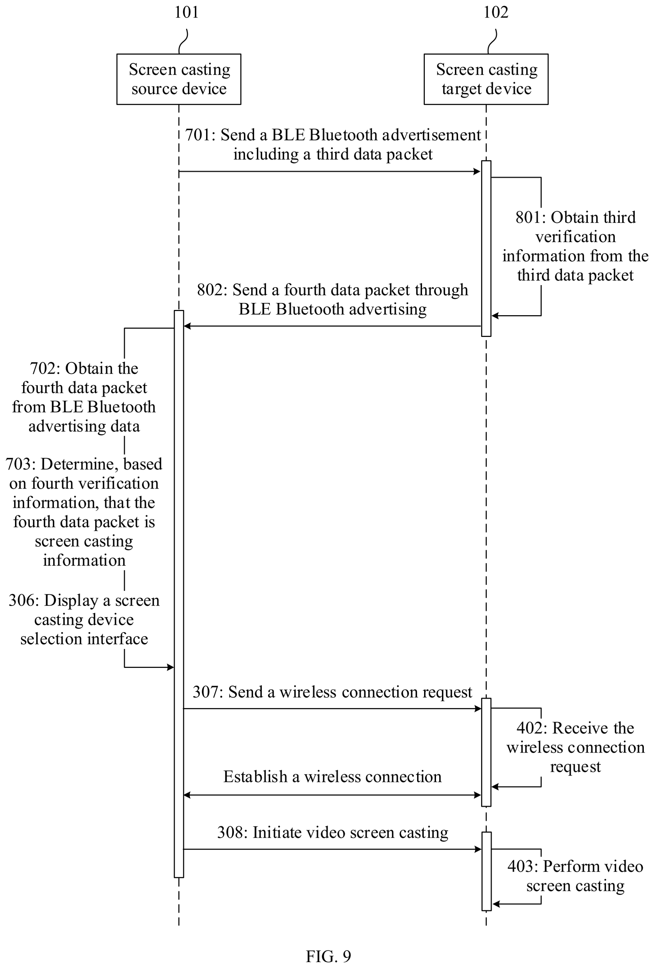

In some embodiments, as shown in FIG. 9, the screen casting method applied to the screen casting source device 101 further includes steps 701 to 703, and the screen casting method applied to the screen casting target device 102 further includes steps 801 and 802.

The interaction procedure further includes the following steps.

In response to the operation of initiating screen casting, the screen casting source device 101 performs step 701 of sending a BLE Bluetooth advertisement including a third data packet. The third data packet includes third verification information, and the third verification information includes, for example, a UUID "BLECAST" and device searching action information, for example, "searchDevice".

The screen casting target device 102 performs step 801 of receiving, through BLE Bluetooth advertising, the third data packet sent by the screen casting source device 101, and obtains the third verification information from the third data packet.

In response to that the third verification information is obtained, the screen casting target device 102 performs step 802 of sending a fourth data packet through BLE Bluetooth advertising. The fourth data packet includes fourth verification information, the device information, and the wireless connection information. The fourth verification information includes, for example, a UUID "BLECAST" and a serviceID "HwBLeCast", the device information is, for example, a device name "xx television xx", and the wireless connection information includes, for example, a MAC address "86:xx:xx:xx: 17:DB" and a Bluetooth BrMAC address "74:xx:xx:xx:32:40".

The screen casting source device 101 performs step 702 of obtaining the fourth data packet from BLE Bluetooth advertising data.

The screen casting source device 101 performs step 703 of determining, based on the fourth verification information, that the fourth data packet is screen casting information.

In the interaction procedures shown in FIG. 6 and FIG. 7, before a device is discovered, that is, before the screen casting information is determined, the screen casting source device 101 does not need to actively send a data packet, the screen casting target device 102 may periodically initiate BLE Bluetooth advertising, and the screen casting source device 101 only traverses and queries the screen casting information from found BLE Bluetooth advertising data. After the screen casting information is determined, wireless connection and video screen casting may be performed based on the screen casting information. In other words, FIG. 6 and FIG. 7 record the process of passively discovering a device and the process of performing screen casting based on a passively discovered device. However, in the interaction procedure shown in FIG. 9, the screen casting source device 101 actively sends the third data packet through BLE Bluetooth advertising. After receiving the third data packet, the screen casting target device 101 replies the fourth data packet to the screen casting source device 101. The screen casting source device 101 determines the screen casting information based on the fourth data packet. The screen casting information determined based on the fourth data packet and the screen casting information determined based on the first data packet and the second data packet both have the device information and the wireless connection information required in the subsequent procedures. Therefore, after step 703, the screen casting source device 101 may perform steps 306 to 308 to implement the subsequent screen casting procedure based on the device information and the wireless connection information in the fourth data packet. In step 306, the device information in the fourth data packet may be displayed on the device selection interface, and corresponds to the alternative device option. When the user taps the option, the wireless connection request is sent to the screen casting target device 102 based on the wireless connection information in the fourth data packet, to establish a wireless connection. In other words, FIG. 9 records the process of actively discovering a device and the process of performing screen casting based on an actively discovered device. The processes of steps 306 to 308 and steps 402 and 403 in FIG. 6 and FIG. 9 are the same, except that screen casting information used in the processes is different. The screen casting information in FIG. 6 is the first data packet and the second data packet, and the screen casting information in FIG. 9 is the fourth data packet. In an overall interaction procedure, the screen casting source device 101 performs steps 301 and 701 in response to the operation of initiating screen casting, and the screen casting target device 102 performs steps 401 and 801 in response to the operation of initiating Bluetooth advertising. That is, the dual ends synchronously perform the procedure of actively discovering a device and the procedure of passively discovering a device. When the screen casting information is obtained through either of the methods, that is, device discovery is implemented, subsequent wireless connection and screen casting procedures may be performed. If the screen casting information is first obtained in one of the procedures, the subsequent wireless connection and screen casting procedures use the screen casting information obtained in the procedure. The procedure of actively discovering a device and the procedure of passively discovering a device are synchronously performed, and therefore a probability and a speed of device discovery can be improved.

In some embodiments, in a process in which the procedure of actively discovering a device and the procedure of passively discovering a device are synchronously performed, after determining, based on the first verification information and the second verification information, that the first data packet and the second data packet are the associated screen casting information, the screen casting source device 101 stops sending the third data packet. That is, if the device has been discovered in the procedure of passively discovering a device, the third data packet used to actively discover a device is no longer sent, to implement a logical closed-loop of the entire procedure and improve security.

In some embodiments, in the process in which the procedure of actively discovering a device and the procedure of passively discovering a device are synchronously performed, in response to that the third verification information is obtained, the screen casting target device 102 stops sending the first data packet and the second data packet. That is, if the device has been discovered in the procedure of actively discovering a device, the first data packet and the second data packet used to passively discover a device are no longer sent, to implement a logical closed-loop of the entire procedure and improve security.

In some embodiments, any one of the first data packet, the second data packet, the third data packet, and the fourth data packet is a same advertising structure of a protocol data unit in the Bluetooth advertising data. In this manner, an existing Bluetooth protocol does not need to be greatly changed, and a device having a screen casting capability can be discovered only by adding screen casting capability information to a reserved field in the protocol.

In some embodiments, the wireless connection is a Bluetooth low energy BLE connection or a wireless fidelity Wi-Fi point-to-point P2P connection.

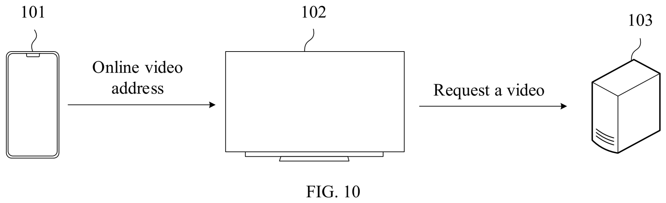

In some embodiments, the wireless connection is the BLE Bluetooth connection. Step 308 of initiating video screen casting to the screen casting target device 102 via the wireless connection includes: sending an online video address to the screen casting target device 102 via the BLE Bluetooth connection. Step 403 of performing video screen casting via the wireless connection includes: receiving, via the wireless connection, the online resource address sent by the screen casting source device; requesting and receiving an online video based on the online resource address; and playing the online video. As shown in FIG. 10, in a screen casting process of an online video, the screen casting source device 101 sends the online video address to the screen casting target device 102 in step 308, and the screen casting target device 102 requests a video from a server 103 based on the online video address. The server 103 herein may be a cloud server. That is, the screen casting target device 102 may request and obtain a video resource from the cloud server via the Internet, and play, on the screen casting target device 102, the video obtained from the cloud, to implement a screen casting function. In addition, the server 103 may also be a local server. That is, the screen casting target device 102 may request and obtain a video resource from the local server via a local area network, and play, on the screen casting target device 102, the video obtained from the local server.

In some embodiments, the wireless connection is the Wi-Fi P2P connection. Step 308 of initiating video screen casting to the screen casting target device 102 via the wireless connection includes: sending an online video address or a local video to the screen casting target device via the Wi-Fi P2P connection. Step 403 of performing video screen casting via the wireless connection includes: receiving, via the wireless connection, the local video sent by the screen casting source device; and playing the local video. Alternatively, step 403 of performing video screen casting via the wireless connection includes: receiving, via the wireless connection, the online resource address sent by the screen casting source device; requesting and receiving an online video based on the online resource address; and playing the online video. Compared with the BLE Bluetooth connection, the Wi-Fi P2P connection has a larger bandwidth. Therefore, in addition to transmitting an online video address via the Wi-Fi P2P connection to implement online video screen casting and playing, the screen casting source device 101 may directly send a video stream to the screen casting target device 102 via the Wi-Fi P2P connection, and then decode and play the video stream, to implement local video screen casting and playing.

With development of technologies, the BLE Bluetooth connection may also be used to directly transmit a local video stream, so that local video screen casting and playing can be implemented via the BLE Bluetooth connection.

In some embodiments, the online video address may be a uniform resource locator (Uniform Resource Locator, URL) or a uniform resource identifier (Uniform Resource Identifier, URI). Moreover, in addition to being used to transmit an address and a video stream, the wireless connection may be used to transmit a playback control instruction, to control video playback of the screen casting target device by using the screen casting source device.

In some embodiments, in addition to being applied to a screen casting scenario, the foregoing interaction procedures may be applied to another scenario, for example, applied to a file sharing scenario. In the file sharing scenario, the screen casting source device is a file sharing source device, the operation of initiating screen casting is an operation of initiating file sharing, the serviceID indicates a file sharing service, the screen casting information is file sharing information, the screen casting device selection interface is a sharing device selection interface, the screen casting target device option is a file sharing target device option, the screen casting target device is a file sharing target device, initiating video screen casting is initiating file sharing, performing video screen casting is performing file sharing, and the screen casting starting action information is file sharing starting action information. Specific step logic and principles are the same as those in the foregoing embodiments, and a difference lies only in variations brought by application scenarios. In the file sharing scenario, dual-end devices may implement device discovery through BLE Bluetooth advertising, that is, determine file sharing information through BLE Bluetooth advertising, and then establish a wireless connection based on device information and wireless connection information in the file sharing information and implement file sharing via the wireless connection. That is, application scenarios of the interaction procedure are extended. Specific processes and principles of the interaction procedures in the file sharing scenario and the screen casting scenario are similar, and are not described herein again.

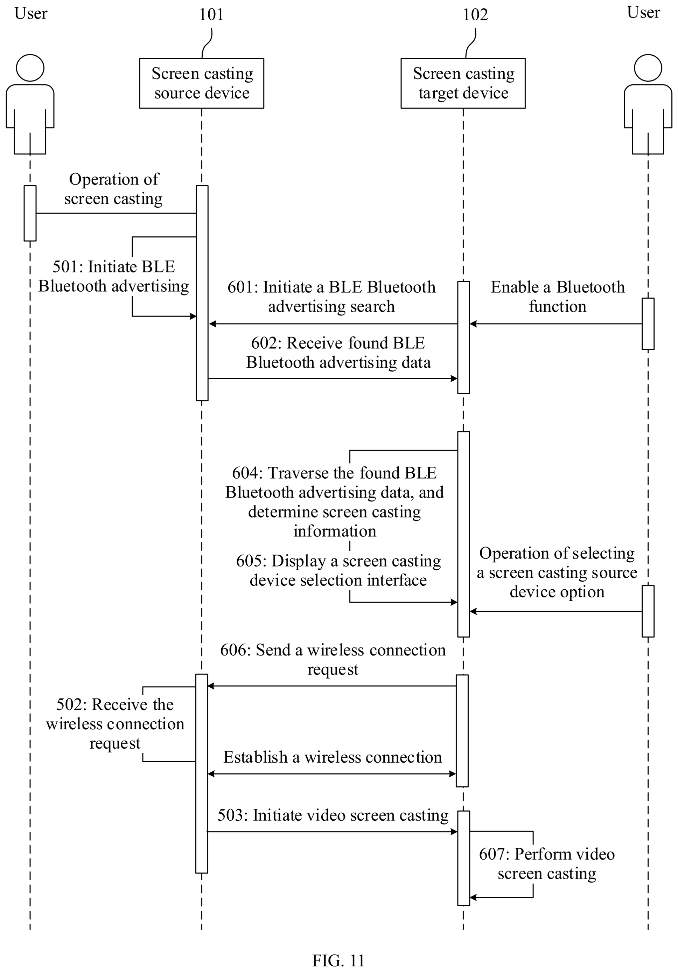

In all passive discovery procedures in the foregoing embodiments, the screen casting target device initiates BLE Bluetooth advertising, and the screen casting source device performs a BLE Bluetooth advertising search, to discover a device. Actually, alternatively, the screen casting source device may be used to initiate BLE Bluetooth advertising, and the screen casting target device is used to perform the BLE Bluetooth advertising search, to discover a device. An example is used for description below. As shown in FIG. 11, an embodiment of this application further provides a screen casting interaction method, including a screen casting method applied to the screen casting source device and a screen casting method applied to the screen casting target device. The screen casting method applied to the screen casting source device includes steps 501 to 503, and the screen casting method applied to the screen casting target device includes steps 601 to 607.

The interaction procedure includes the following steps.

The user performs, on the screen casting source device 101, an operation of initiating screen casting. For example, the screen casting source device 101 runs a video application, the user taps the "TV" button in an upper right corner of a video playback interface of the screen casting source device 101, and tapping the button is performing the operation of initiating screen casting. It should be noted that the operation of initiating screen casting may be implemented in different manners, for example, may alternatively be triggered and implemented by using a gesture operation. This is not limited in embodiments of this application, and only an example is provided herein for description.

When detecting the operation of initiating screen casting performed by the user on the screen casting source device 101, in response to the operation of initiating screen casting, the screen casting source device 101 performs step 501 of initiating BLE Bluetooth advertising. BLE Bluetooth advertising data includes a first data packet and a second data packet. The first data packet includes first verification information and encrypted information, and the second data packet includes second verification information and a key.

The user performs an operation of enabling a Bluetooth function on the screen casting target device 102.

When detecting the operation of enabling the Bluetooth function performed by the user on the screen casting target device 102, the screen casting target device 102 performs step 601 of initiating a BLE Bluetooth advertising search. The Bluetooth advertising search may also be referred to as a Bluetooth scan.

The screen casting target device 102 performs step 602 of receiving found BLE Bluetooth advertising data. The BLE Bluetooth advertising data includes the first data packet and the second data packet.

The screen casting target device 102 performs step 604 of traversing all the found BLE Bluetooth advertising data, and obtains the first data packet and the second data packet from the found BLE Bluetooth advertising data. The first verification information in the first data packet and the second verification information in the second data packet are plaintext. The two data packets may be determined as associated information through verification performed based on the two pieces of verification information. The encrypted information in the first data packet may be decrypted by using the key in the second data packet, and the device information and the wireless connection information are obtained from the decrypted encrypted information. The encrypted information may further have a callback function. The first data packet and the second data packet are determined to be associated screen casting information based on the first verification information and the second verification information. After the screen casting information is determined, a subsequent screen casting procedure is performed. That is, if the device information and the wireless connection information are obtained from the first data packet through decryption by using the key in the second data packet, and it is determined that the second data packet has screen casting starting action information, subsequent step 605 is performed.

The screen casting target device 102 performs step 605 of displaying the screen casting device selection interface. The alternative device option that corresponds to one or more pieces of screen casting information determined in the BLE Bluetooth advertising data is displayed on the screen casting device selection interface, and the alternative device option includes the device information in the corresponding one or more pieces of screen casting information. For example, in this embodiment, only screen casting information corresponding to the screen casting source device 101 is found, and therefore, only the alternative device option including a device name "xx mobile phone xx" is displayed.

When tapping the alternative device option on the screen casting target device 102, the user performs an operation of selecting a screen casting source device option of the at least one alternative device option. The alternative device option tapped by the user is the screen casting source device option selected by the user. When detecting that the user performs, on the screen casting target device 102, the operation of selecting the screen casting source device option of the at least one alternative device option, the screen casting target device 102 performs, based on the wireless connection information in the screen casting information that corresponds to the screen casting source device option, step 606 of sending a wireless connection request to the screen casting source device 101, and establishing a wireless connection to the screen casting target device.

The screen casting source device 101 performs step 502 of receiving the wireless connection request sent by the screen casting target device 102, and establishes the wireless connection to the screen casting source device based on the wireless connection request.

The screen casting target device 102 performs step 503 of initiating video screen casting to the screen casting source device 101 via the wireless connection.

The screen casting source device 101 performs step 607 of performing video screen casting via the wireless connection.

A specific manner of the wireless connection, a specific manner of performing video screen casting, and the like may be the same as those in the foregoing embodiments. Compared with the interaction method shown in FIG. 6, the interaction method shown in FIG. 11 has a same principle, that is, in both methods, two associated data packets are added to the BLE Bluetooth advertising data. In a screen casting process, the two associated data packets are determined through the BLE Bluetooth search and based on verification information. A key in one of the data packets is used to decrypt encrypted information in the other packet, to obtain the device information and the wireless connection information, and then discover the screen casting target device. Then, the wireless connection is established based on the wireless connection information to implement screen casting. A difference between FIG. 11 and FIG. 6 lies in that in FIG. 6, BLE Bluetooth advertising is initiated on a screen casting source device side, and the BLE Bluetooth advertising search is performed on a screen casting target device side, while in FIG. 11, BLE Bluetooth advertising is initiated on the screen casting target device side, and the BLE Bluetooth advertising search is performed on the screen casting source device side.

Regardless of the interaction procedure shown in FIG. 6 or the interaction procedure shown in FIG. 11, because a device is discovered in a BLE Bluetooth search manner, and dual ends do not need to be connected to a same local area network, restrictions on screen casting are small, and a use scenario is more flexible. In addition, compared with a manner of discovering a device by using an SSDP, when the manner of discovering a device through the BLE Bluetooth search is used, there is a lower probability that the device cannot be found. In addition, because a distance range of the BLE Bluetooth search is narrow, an irrelevant device is not easily found, the screen casting source device is more easily determined, and the screen casting confusion problem caused due to a large quantity of devices being found does not easily occur. Meanwhile, plaintext information in one of the data packets is used to decrypt encrypted information in the other packet, and verification is performed not only based on the plaintext information. This can improve security in the screen casting process, and prevents the data packet from being incorrectly identified by another device.

In some embodiments, in the interaction procedure shown in FIG. 11, the encrypted information further includes third verification information. Obtaining the device information and the wireless connection information from the decrypted encrypted information includes: obtaining the device information, the wireless connection information, and the third verification information from the decrypted encrypted information; and a process of determining, based on the first verification information and the second verification information, that the first data packet and the second data packet are the associated screen casting information includes: determining, based on the first verification information, the second verification information, and the third verification information, that the first data packet and the second data packet are the associated screen casting information. In other words, in a process of determining the screen casting information from the BLE Bluetooth advertising data, in addition to verification performed based on the plaintext first verification information and the plaintext second verification information, verification may alternatively be performed based on the third verification information in the encrypted information. Only after the third verification information is decrypted by using the key in the second data packet, verification can be performed based on the third verification information in the first data packet. This can further improve security.

In some embodiments, in the interaction procedure shown in FIG. 11, the first verification information includes a universally unique identifier UUID, the second verification information includes the UUID, a service identifier serviceID, and screen casting starting action information, and the third verification information includes the serviceID. The UUID may indicate a BLE Bluetooth discovery device service, and the serviceID indicates a screen casting service. For example, the first verification information includes a UUID "BLECAST", the second verification information includes the UUID "BLECAST", a serviceID "HwBLeCast", and screen casting starting action information "startCast", and the third verification information includes the serviceID "HwBLeCast". The screen casting target device determines that services corresponding to the two data packets are the BLE Bluetooth discovery device service if determining that the UUID in the first verification information and that in the second verification information are the same and are both "BLECAST"; determines that the services corresponding to the two data packets are the screen casting service if determining that the serviceID in the second verification information and that in the third verification information are the same and are both "HwBLeCast"; determines, based on the screen casting starting action information "startCast" in the second data packet, to start a screen casting procedure; and determines that the first data packet and the second data packet are the associated screen casting information. Verification performed based on the UUID and the serviceID can improve extensibility of the entire procedure. For example, in another possible implementation, if the UUIDs in the two data packets are determined to be fields corresponding to the BLE Bluetooth discovery service, and the serviceIDs in the two packets are determined to be fields corresponding to a file sharing service, it is determined that the two data packets are not mutually associated screen casting information, but are mutually associated file sharing information, and are used to implement the file sharing service.

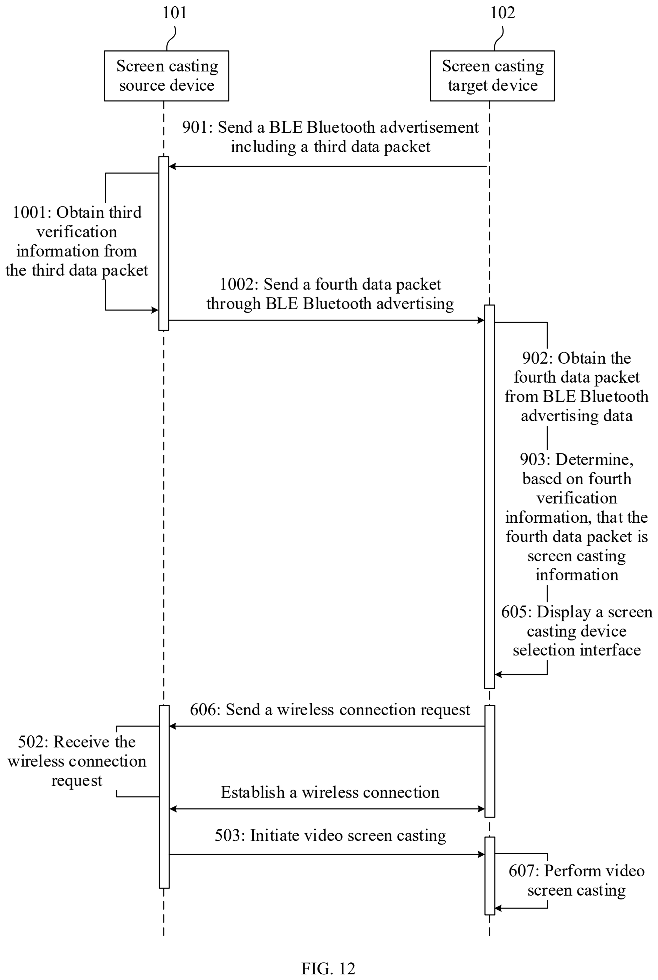

In some embodiments, as shown in FIG. 12, on a basis of FIG. 11, the screen casting method applied to the screen casting source device 101 further includes steps 901 to 903, and the screen casting method applied to the screen casting target device 102 further includes steps 1001 and 1002.

The interaction procedure further includes the following steps.

In response to the operation of initiating a Bluetooth search, the screen casting target device 102 performs step 901 of sending a BLE Bluetooth advertisement including a third data packet. The third data packet includes third verification information, and the third verification information includes, for example, a UUID "BLECAST" and device searching action information, for example, the device searching action information "searchDevice".

The screen casting source device 101 performs step 1001 of receiving, through BLE Bluetooth advertising, the third data packet sent by the screen casting target device 102, and obtains the third verification information and the device searching action information from the third data packet.

In response to that the third verification information and the device searching action information are obtained, the screen casting source device 101 performs step 1002 of sending a fourth data packet through BLE Bluetooth advertising. The fourth data packet includes fourth verification information, the device information, and the wireless connection information. The fourth verification information includes, for example, a UUID "BLECAST" and a serviceID "HwBLeCast", the device information is, for example, a device name "xx television xx", and the wireless connection information includes, for example, a MAC address "86:xx:xx:xx:17:DB" and a Bluetooth BrMAC address "74:xx:xx:xx:32:40".

The screen casting target device 102 performs step 902 of obtaining the fourth data packet from BLE Bluetooth advertising data.

The screen casting target device 102 performs step 903 of determining, based on the fourth verification information, that the fourth data packet is screen casting information.

The manner of determining the screen casting information in FIG. 11 is different from that in FIG. 12. FIG. 11 relates to a procedure of passively discovering a device, and FIG. 12 relates to a procedure of actively discovering a device. After the device is discovered, the screen casting information is determined. Subsequent wireless connection and screen casting procedures are the same. The procedure of actively discovering a device and the procedure of passively discovering a device are synchronously performed. If the screen casting information is first obtained in one of the procedures, the subsequent wireless connection and screen casting procedures use the screen casting information obtained in the procedure. The procedure of actively discovering a device and the procedure of passively discovering a device are synchronously performed, and therefore a probability and a speed of device discovery can be improved.

In some embodiments, based on the interaction procedures in FIG. 11 and FIG. 12, in a process in which the procedure of actively discovering a device and the procedure of passively discovering a device are synchronously performed, after determining, based on the first verification information and the second verification information, that the first data packet and the second data packet are the associated screen casting information, the screen casting target device 102 stops sending the third data packet. That is, if the device has been discovered in the procedure of passively discovering a device, the third data packet used to actively discover a device is no longer sent, to implement a logical closed-loop of the entire procedure and improve security.

In some embodiments, based on the interaction procedures in FIG. 11 and FIG. 12, in the process in which the procedure of actively discovering a device and the procedure of passively discovering a device are synchronously performed, in response to that the third verification information is obtained, the screen casting source device 101 stops sending the first data packet and the second data packet. That is, if the device has been discovered in the procedure of actively discovering a device, the first data packet and the second data packet used to passively discover a device are no longer sent, to implement a logical closed-loop of the entire procedure and improve security.

An embodiment of this application provides a screen casting apparatus, applied to a screen casting source device. The screen casting apparatus includes: a Bluetooth module, configured to: in response to an operation of initiating screen casting, initiate a Bluetooth low energy BLE advertising search, where the Bluetooth module is further configured to: receive found BLE Bluetooth advertising data, and obtain a first data packet and a second data packet from the BLE Bluetooth advertising data, where the first data packet includes first verification information and encrypted information, and the second data packet includes second verification information and a key; a device discovery module, configured to: decrypt the encrypted information by using the key, and obtain device information and wireless connection information from the decrypted encrypted information; and determine, based on the first verification information and the second verification information, that the first data packet and the second data packet are associated screen casting information; a display module, configured to: display a screen casting device selection interface, where an alternative device option that corresponds to one or more pieces of screen casting information determined in the BLE Bluetooth advertising data is displayed on the screen casting device selection interface, and the alternative device option includes the device information in the corresponding one or more pieces of screen casting information; a wireless connection module, configured to: in response to an operation of selecting a screen casting target device option of the at least one alternative device option, send a wireless connection request to a screen casting target device based on the wireless connection information in the screen casting information that corresponds to the screen casting target device option, and establish a wireless connection to the screen casting target device; and a screen casting module, configured to initiate video screen casting to the screen casting target device via the wireless connection.

The screen casting apparatus may use the screen casting method in the foregoing embodiments. A specific process and principle are the same as those in the foregoing embodiments. Details are not described herein again.

It should be understood that division of the foregoing screen casting apparatus is merely logical function division. During actual implementation, all or some of the modules may be integrated into one physical entity, or may be physically separated. In addition, all of the modules may be implemented in a form of software invoked by using a processing element or may be implemented in a form of hardware. Alternatively, some modules may be implemented in a form of software invoked by using the processing element, and some modules are implemented in a form of hardware. For example, any one of the Bluetooth module, the device discovery module, the display module, the wireless connection module, and the screen casting module may be a separately disposed processing element, or may be integrated into the screen casting apparatus, for example, integrated into a chip of the screen casting apparatus, or may be stored in a memory of the screen casting apparatus in a form of a program, and may be invoked by a processing element of the screen casting apparatus to perform a function of each module. Implementations of other modules are similar. In addition, all or some of the modules may be integrated, or may be independently implemented. The processing element may be an integrated circuit and has a signal processing capability. In an implementation process, steps in the foregoing methods or the foregoing modules can be implemented by using a hardware integrated logic circuit in the processor element, or by using instructions in a form of software.

For example, the modules, the Bluetooth module, the device discovery module, the display module, the wireless connection module, and the screen casting module, may be configured as one or more integrated circuits for implementing the foregoing methods, for example, one or more application-specific integrated circuits (Application-Specific Integrated Circuit, ASIC), one or more microprocessors (digital signal processor, DSP), one or more field programmable gate arrays (Field Programmable Gate Array, FPGA), or the like. For another example, when one of the foregoing modules is implemented in a form of scheduling a program by a processing element, the processing element may be a general-purpose processor, such as a central processing unit (Central Processing Unit, CPU) or another processor that can invoke the program. For another example, the modules may be integrated together and implemented in a form of a system-on-a-chip (system-on-a-chip, SOC).

An embodiment of this application further provides a screen casting apparatus, applied to a screen casting target device. The screen casting apparatus includes: a Bluetooth advertising module, configured to: in response to an operation of initiating Bluetooth advertising, initiate Bluetooth low energy BLE advertising, where BLE Bluetooth advertising data includes a first data packet and a second data packet, the first data packet includes first verification information and encrypted information, the second data packet includes second verification information and a key, the key is used to decrypt the encrypted information, and the encrypted information includes device information and wireless connection information; a wireless connection module, configured to: receive a wireless connection request sent by a screen casting source device, and establish a wireless connection to the screen casting source device based on the wireless connection request; and a screen casting module, configured to perform video screen casting via the wireless connection.

An embodiment of this application further provides a screen casting apparatus, applied to a screen casting source device. The screen casting apparatus includes: a Bluetooth advertising module, configured to: in response to an operation of initiating screen casting, initiate Bluetooth low energy BLE advertising; where Bluetooth low energy BLE advertising data includes a first data packet and a second data packet, the first data packet includes first verification information and encrypted information, the second data packet includes second verification information and a key, the key is used to decrypt the encrypted information, and the encrypted information includes device information and wireless connection information; a wireless connection module, configured to: receive a wireless connection request sent by a screen casting target device, and establish a wireless connection to the screen casting source device based on the wireless connection request; and a screen casting module, configured to initiate video screen casting to the screen casting target device via the wireless connection.

An embodiment of this application further provides a screen casting apparatus, applied to a screen casting target device. The screen casting apparatus includes: a Bluetooth module, configured to: in response to an operation of initiating a Bluetooth search, initiate a Bluetooth low energy BLE advertising search, where the Bluetooth module is further configured to receive found BLE Bluetooth advertising data; a discovery module, configured to: obtain a first data packet and a second data packet from the BLE Bluetooth advertising data, where the first data packet includes first verification information and encrypted information, and the second data packet includes second verification information and a key; decrypt the encrypted information by using the key, and obtain device information and wireless connection information from the decrypted encrypted information; and determine, based on the first verification information and the second verification information, that the first data packet and the second data packet are associated screen casting information; a display module, configured to: display a screen casting device selection interface, where an alternative device option that corresponds to one or more pieces of screen casting information determined in the BLE Bluetooth advertising data is displayed on the screen casting device selection interface, and the alternative device option includes the device information in the corresponding one or more pieces of screen casting information; a wireless connection module, configured to: in response to an operation of selecting a screen casting source device option of the at least one alternative device option, send a wireless connection request to a screen casting source device based on the wireless connection information in the screen casting information that corresponds to a screen casting source device option, and establish a wireless connection to the screen casting source device; and a screen casting module, configured to perform video screen casting via the wireless connection.

An embodiment of this application further provides a chip, including a processor. The processor is configured to read and run a computer program stored in a memory, to perform the screen casting method in any one of the foregoing embodiments.

An embodiment of this application further provides a computer-readable storage medium. The computer-readable storage medium includes a stored program. When the program is run, a device in which the computer-readable storage medium is located is controlled to perform the screen casting method in any one of the foregoing embodiments.

An embodiment of this application further provides a computer program product. The computer program product includes executable instructions. When the executable instructions are executed on a computer, the computer is enabled to perform the screen casting method in any one of the foregoing embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid-State Disk), or the like.

In embodiments of this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists. A and B may be singular or plural. The character "/" usually indicates an "or" relationship between the associated objects. "At least one of the following" and similar expressions refer to any combination of these terms, including any combination of single or plural terms. For example, at least one of a, b, and c may represent: a, b, c, a-b, a-c, b-c, or a-b-c, where a, b, and c may be one or more.

The foregoing descriptions are merely preferred embodiments of this application, and are not intended to limit this application. For a person skilled in the art, this application may have various modifications and variations. Any modification, equivalent replacement, improvement, and the like made without departing from the spirit and principle of this application shall fall within the protection scope of this application.

## Claims

1. A screen casting method, applied to a screen casting source device, wherein the method comprises:
in response to an operation of initiating screen casting, initiating a Bluetooth low energy BLE advertising search;
receiving found BLE Bluetooth advertising data, and obtaining a first data packet and a second data packet from the BLE Bluetooth advertising data, wherein the first data packet comprises first verification information and encrypted information, and the second data packet comprises second verification information and a key;
decrypting the encrypted information by using the key, and obtaining device information and wireless connection information from the decrypted encrypted information;
determining, based on the first verification information and the second verification information, that the first data packet and the second data packet are associated screen casting information;
displaying a screen casting device selection interface, wherein an alternative device option that corresponds to one or more pieces of screen casting information determined in the BLE Bluetooth advertising data is displayed on the screen casting device selection interface, and the alternative device option comprises the device information in the corresponding one or more pieces of screen casting information;
in response to an operation of selecting a screen casting target device option of the at least one alternative device option, sending a wireless connection request to a screen casting target device based on the wireless connection information in the screen casting information that corresponds to the screen casting target device option, and establishing a wireless connection to the screen casting target device; and
initiating video screen casting to the screen casting target device via the wireless connection.

2. The method according to claim 1, wherein
obtaining the device information and the wireless connection information from the decrypted encrypted information comprises: obtaining the device information, the wireless connection information, and third verification information from the decrypted encrypted information; and
a process of determining, based on the first verification information and the second verification information, that the first data packet and the second data packet are the associated screen casting information comprises:
determining, based on the first verification information, the second verification information, and the third verification information, that the first data packet and the second data packet are the associated screen casting information.

3. The method according to claim 2, wherein
the first verification information comprises a universally unique identifier UUID, the second verification information comprises the UUID, a service identifier serviceID, and screen casting starting action information, the third verification information comprises the serviceID, and the serviceID indicates a screen casting service.

4. The method according to claim 1, further comprising:
in response to the operation of initiating screen casting, sending a BLE Bluetooth advertisement comprising a third data packet, wherein the third data packet comprises third verification information;
obtaining a fourth data packet from the BLE Bluetooth advertising data, wherein the fourth data packet comprises fourth verification information, the device information, and the wireless connection information; and
determining, based on the fourth verification information, that the fourth data packet is the screen casting information.

5. The method according to claim 4, wherein
after the process of determining, based on the first verification information and the second verification information, that the first data packet and the second data packet are the associated screen casting information, stopping sending the third data packet.

6. The method according to claim 3, wherein
the screen casting source device is a file sharing source device, the operation of initiating screen casting is an operation of initiating file sharing, the serviceID indicates a file sharing service, the screen casting information is file sharing information, the screen casting device selection interface is a sharing device selection interface, the screen casting target device option is a file sharing target device option, the screen casting target device is a file sharing target device, initiating video screen casting is initiating file sharing, and the screen casting starting action information is file sharing starting action information.

7. The method according to claim 1, wherein
either the first data packet or the second data packet is a same advertising structure of a protocol data unit in the Bluetooth advertising data.

8. The method according to claim 1, wherein
the wireless connection is a Bluetooth low energy BLE connection or a wireless fidelity Wi-Fi point-to-point P2P connection.

9. The method according to claim 8, wherein
the wireless connection is the BLE Bluetooth connection; and
initiating video screen casting to the screen casting target device via the wireless connection comprises: sending an online video address to the screen casting target device via the BLE Bluetooth connection.

10. The method according to claim 8, wherein
the wireless connection is the Wi-Fi P2P connection; and
initiating video screen casting to the screen casting target device via the wireless connection comprises: sending an online video address or a local video to the screen casting target device via the Wi-Fi P2P connection.

11. A screen casting method, applied to a screen casting target device, wherein the method comprises:
in response to an operation of initiating Bluetooth advertising, initiating Bluetooth low energy BLE advertising, wherein the BLE Bluetooth advertising data comprises a first data packet and a second data packet, the first data packet comprises first verification information and encrypted information, the second data packet comprises second verification information and a key, the key is used to decrypt the encrypted information, and the encrypted information comprises device information and wireless connection information;
receiving a wireless connection request sent by a screen casting source device, and establishing a wireless connection to the screen casting source device based on the wireless connection request; and
performing video screen casting via the wireless connection.

12. The method according to claim 11, wherein
the encrypted information further comprises third verification information.

13. The method according to claim 12, wherein
the first verification information comprises a universally unique identifier UUID, the second verification information comprises the UUID, a service identifier serviceID, and screen casting starting action information, and the third verification information comprises the serviceID.

14. The method according to claim 11, further comprising:
receiving, through BLE Bluetooth advertising, a third data packet sent by the screen casting source device;
obtaining third verification information from the third data packet; and
in response to that the third verification information is obtained, sending a fourth data packet through BLE Bluetooth advertising, wherein the fourth data packet comprises fourth verification information, the device information, and the wireless connection information.

15. The method according to claim 14, wherein
in response to that the third verification information is obtained, stopping sending the first data packet and the second data packet.

16. The method according to claim 13, wherein
the screen casting target device is a file sharing target device, the serviceID indicates a file sharing service, the screen casting source device is a file sharing source device, performing video screen casting is performing file sharing, and the screen casting starting action information is file sharing starting action information.

17. The method according to claim 11, wherein
either the first data packet or the second data packet is a same advertising structure of a protocol data unit in the Bluetooth advertising data.

18. The method according to claim 11, wherein
the wireless connection is a Bluetooth low energy BLE connection or a wireless fidelity Wi-Fi point-to-point P2P connection; and
performing video screen casting via the wireless connection comprises:
receiving, via the wireless connection, an online resource address sent by the screen casting target device;
requesting and receiving an online video based on the online resource address; and
playing the online video.

19. The method according to claim 11, wherein
the wireless connection is the Wi-Fi P2P connection; and
performing video screen casting via the wireless connection comprises:
receiving, via the wireless connection, a local video sent by the screen casting target device; and
playing the local video.

20. A screen casting method, applied to a screen casting source device, wherein the method comprises:
in response to an operation of initiating screen casting, initiating Bluetooth low energy BLE advertising, wherein the Bluetooth low energy BLE advertising data comprises a first data packet and a second data packet, the first data packet comprises first verification information and encrypted information, the second data packet comprises second verification information and a key, the key is used to decrypt the encrypted information, and the encrypted information comprises device information and wireless connection information;
receiving a wireless connection request sent by a screen casting target device, and establishing a wireless connection to the screen casting source device based on the wireless connection request; and
initiating video screen casting to the screen casting target device via the wireless connection.

21. The method according to claim 20, wherein
the encrypted information further comprises third verification information.

22. The method according to claim 21, wherein
the first verification information comprises a universally unique identifier UUID, the second verification information comprises the UUID, a service identifier serviceID, and screen casting starting action information, and the third verification information comprises the serviceID.

23. The method according to claim 20, further comprising:
receiving, through BLE Bluetooth advertising, a third data packet sent by the screen casting target device;
obtaining third verification information from the third data packet; and
in response to that the third verification information is obtained, sending a fourth data packet through BLE Bluetooth advertising, wherein the fourth data packet comprises fourth verification information, the device information, and the wireless connection information.

24. The method according to claim 23, wherein
in response to that the third verification information is obtained, stopping sending the first data packet and the second data packet.

25. The method according to claim 22, wherein
the screen casting target device is a file sharing target device, the serviceID indicates a file sharing service, the screen casting source device is a file sharing source device, initiating video screen casting is initiating file sharing, and the screen casting starting action information is file sharing starting action information.

26. The method according to claim 20, wherein
either the first data packet or the second data packet is a same advertising structure of a protocol data unit in the Bluetooth advertising data.

27. The method according to claim 20, wherein
the wireless connection is a Bluetooth low energy BLE connection or a wireless fidelity Wi-Fi point-to-point P2P connection.

28. The method according to claim 27, wherein
the wireless connection is the BLE Bluetooth connection; and
initiating video screen casting to the screen casting target device via the wireless connection comprises: sending an online video address to the screen casting target device via the BLE Bluetooth connection.

29. The method according to claim 27, wherein
the wireless connection is the Wi-Fi P2P connection; and
initiating video screen casting to the screen casting target device via the wireless connection comprises: sending an online video address or a local video to the screen casting target device via the Wi-Fi P2P connection.

30. A screen casting method, applied to a screen casting target device, wherein the method comprises:
in response to an operation of initiating a Bluetooth search, initiating a Bluetooth low energy BLE advertising search;
receiving found BLE Bluetooth advertising data;
obtaining a first data packet and a second data packet from the BLE Bluetooth advertising data, wherein the first data packet comprises first verification information and encrypted information, and the second data packet comprises second verification information and a key;
decrypting the encrypted information by using the key, and obtaining device information and wireless connection information from the decrypted encrypted information;
determining, based on the first verification information and the second verification information, that the first data packet and the second data packet are associated screen casting information;
displaying a screen casting device selection interface, wherein an alternative device option that corresponds to one or more pieces of screen casting information determined in the BLE Bluetooth advertising data is displayed on the screen casting device selection interface, and the alternative device option comprises the device information in the corresponding one or more pieces of screen casting information;
in response to an operation of selecting a screen casting source device option of the at least one alternative device option, sending a wireless connection request to a screen casting source device based on the wireless connection information in the screen casting information that corresponds to the screen casting source device option, and establishing a wireless connection to the screen casting source device; and
performing video screen casting via the wireless connection.

31. The method according to claim 30, wherein
obtaining the device information and the wireless connection information from the decrypted encrypted information comprises: obtaining the device information, the wireless connection information, and third verification information from the decrypted encrypted information; and
a process of determining, based on the first verification information and the second verification information, that the first data packet and the second data packet are the associated screen casting information comprises:
determining, based on the first verification information, the second verification information, and the third verification information, that the first data packet and the second data packet are the associated screen casting information.

32. The method according to claim 31, wherein
the first verification information comprises a universally unique identifier UUID, the second verification information comprises the UUID, a service identifier serviceID, and screen casting starting action information, the third verification information comprises the serviceID, and the serviceID indicates a screen casting service.

33. The method according to claim 30, further comprising:
in response to the operation of initiating a Bluetooth search, sending a BLE Bluetooth advertisement comprising a third data packet, wherein the third data packet comprises third verification information and device searching action information;
obtaining a fourth data packet from the BLE Bluetooth advertising data, wherein the fourth data packet comprises fourth verification information, the device information, and the wireless connection information; and
determining, based on the fourth verification information, that the fourth data packet is the screen casting information.

34. The method according to claim 33, wherein
after the process of determining, based on the first verification information and the second verification information, that the first data packet and the second data packet are the associated screen casting information, stopping sending the third data packet.

35. The method according to claim 32, wherein
the screen casting source device is a file sharing source device, the serviceID indicates a file sharing service, the screen casting information is file sharing information, the screen casting device selection interface is a sharing device selection interface, the screen casting target device option is a file sharing target device option, the screen casting target device is a file sharing target device, performing video screen casting is performing file sharing, and the screen casting starting action information is file sharing starting action information.

36. The method according to claim 30, wherein
either the first data packet or the second data packet is a same advertising structure of a protocol data unit in the Bluetooth advertising data.

37. The method according to claim 30, wherein
the wireless connection is a Bluetooth low energy BLE connection or a wireless fidelity Wi-Fi point-to-point P2P connection; and
performing video screen casting via the wireless connection comprises:
receiving, via the wireless connection, an online resource address sent by the screen casting target device;
requesting and receiving an online video based on the online resource address; and
playing the online video.

38. The method according to claim 30, wherein
the wireless connection is the Wi-Fi P2P connection; and
performing video screen casting via the wireless connection comprises:
receiving, via the wireless connection, a local video sent by the screen casting target device; and
playing the local video.

39. An electronic device, comprising a memory configured to store computer program instructions and a processor configured to execute the program instructions, wherein when the computer program instructions are executed by the processor, the electronic device is enabled to perform the method according to any one of claims 1 to 38.

40. A computer-readable storage medium, wherein the computer-readable storage medium comprises a stored program, and when the program is run, a device in which the computer-readable storage medium is located is controlled to perform the method according to any one of claims 1 to 38.

41. A computer program product, wherein the computer program product comprises executable instructions, and when the executable instructions are executed on a computer, the computer is enabled to perform the method according to any one of claims 1 to 38.
